# EUROPEAN PATENT SPECIFICATION

(11) **EP 1 388 778 B1**
(45) Date of publication and mention of the grant of the patent: **12.03.2008**
(21) Application number: 03254359.7
(22) Date of filing: 09.07.2003
(51) Int. Cl.: G06F 1/16

(54) **Portable information device**
Tragbares Informationsgerät
Dispositif d'informations portable

(30) Priority: 07.08.2002 JP 2002230296; 07.08.2002 JP 2002230297; 07.08.2002 JP 2002230298
(43) Date of publication of application: 11.02.2004
(73) Proprietor: Seiko Epson Corporation, Shinjuku-ku Tokyo 163-0811 (JP)
(72) Inventor: Iino, Shoichi, c/o Seiko Epson Corporation, Suwa-shi, Nagano-ken 392-8502 (JP); Urano, Nobutaka, c/o Seiko Epson Corporation, Suwa-shi, Nagano-ken 392-8502 (JP)
(74) Representative: Sturt, Clifford Mark

(56) References cited:
- EP-A- 1 220 515
- DE-A1- 10 014 423
- US-A- 5 030 027
- US-A1- 2002 022 503
- US-A1- 2002 037 754

## Description

The present invention relates to portable information devices such as cellular telephones and personal digital assistants (PDAs) in which mechanical (including electro-mechanical) indication is performed to improve the suitability to user preferences and to add a quality appearance.

At present, flip cell phones are popular in which a screen display section and an operating section are connected together by a hinge structure, thereby allowing an open/close structure. The flip cell phones have an image display section made of a liquid-crystal display panel or an organic electro-luminescence (EL) panel and an operating section including a plurality of buttons and a jog dial on the side that acts as a mouthpiece when the casing is opened. Also, recently, a relatively small image display section is often provided on a surface opposite to the image display section so that information can be displayed even when the casing is closed. The small image display section principally displays remaining electric power, the condition of a radio wave, an incoming call indication, a digital watch and so on. The small image display section is provided to a relatively expensive cellular telephone.

Users who have no watch are increasing in number with the recent widespread use of cellular telephones. A watch (digital display or analog display) displayed on a small screen display section or a main image display section of a cellular telephone is often used by the users for the purpose of knowing time. The scene of a woman who uses a cell phone placed on a table as a watch has become common in a popular cafe and so on.

The conventional flip cell phones, however, display time on liquid-crystal display panels or organic EL panels even now, posing a problem of lacking an upscale image and a fashionable appearance. Also, at present, time is displayed in small digital form on the small image display section on the outer surface of the casing, which provides less sufficient viewability. On the other hand, it is a problem to be solved to reduce power consumption with the realization of a high image quality and a multifunction of portable information devices such as full-color display and moving-image distribution.

In order to achieve the above object, a flip portable information device having a foldable casing according to the present invention is equipped with a mechanical time-watch on the side that becomes the outer side of the casing when the casing is closed.

Since conventional portable information devices (particularly, cellular telephones) use displays such as liquid-crystal display panels and organic EL panels, also image display sections on the outside of the casing seem to use such displays. Therefore, the casings do not generally have watches that use mechanical hand indication. Employing such mechanical watches (typically, analog watches) gives the portable information devices more upscale images and unmechanical fashionable images. Also they will become popular particularly among woman users, thus seeming to produce satisfactory results on a commercial base. The watches may be either quartz watches or mechanical watches only if mechanical time indication is provided. Also, either analog display or digital display will do.

US 2002/0022503 discloses a mobile phone having a dual display and a method for displaying data using the same. The mobile phone includes: an RF terminal for transmitting and receiving RF signal; a main display for displaying operational conditions and messages; a controller connected with the RF terminal for performing a communication and a message displaying; a keypad having keys; a first housing serving as a folder, wherein the main display is mounted on its inner surface; a second housing hinged with the first housing containing the RF terminal and the controller within, wherein the keypad is mounted on an inner surface of the second housing; and a top view display mounted on an upper end surface of the second housing for displaying information of phone state or messages.

According to the present invention, there is provided a flip portable information device having a foldable casing comprising:
a display for displaying information and a clock, on a side of the casing that becomes an inner side when the casing is closed; characterized by
an electro-mechanical clock on a side of the casing that becomes an outer side when the casing is closed;
wherein the time indication by the electro-mechanical clock is made in synchronization with time indication on the display.

The mechanical watch easily provides high decorativeness and high quality. Also, it is very innovative and original in combination with the portable information device. In the above structure, the arrangement of a mechanical watch on the outside of the casing, which corresponds to the back of the display, facilitates fashionable and more-legible time indication.

The portable information device according to the invention is characterized in that the time indication by the mechanical time-watch is made in synchronization with time indication on the display. Accordingly, the same time as that indicated on the display can be viewed on the foldable (flip) casing without the need to open the casing to see the time. As an example of usage, it is also possible that the time advanced or delayed from a correct time is set and displayed on the watch with the correct time displayed on the display, in other words, the time shifted from the correct time by a predetermined time and the correct time can be synchronized, which allows various practical uses as necessary.

Suitably, the watch is a radio controlled watch that automatically corrects time. According to the invention, time is automatically corrected regularly with fixed frequency, so that accurate time display with a minimum error can be seen on the portable information device.

In the above arrangement, the watch and the portable information device preferably have a common power source. In other words, since the power consumption of the watch is extremely smaller than that of the portable information device, there is no need to have a separate power source for the watch, so that it is preferable to share the power source with the portable information device.

Preferably, the watch is an analog watch that moves the hands in response to the reception of an incoming e-mail or an answerphone message. Moving the hand of the analog watch in response to the incoming of e-mail or the like allows the incoming message to be checked even when the portable information device is closed. Also, the entire movement is attractive, so that also the user can enjoy it visually.

Suitably, the analog watch displays the remaining power with the position of the hand. Specifically speaking, the remaining quantity in a power reserve device is indicated by hand. On the other hand, the conventional portable information devices have so small remaining-power indication that it is hard to view, and generally indicate the remaining power in three levels, providing no detailed indication. Therefore, the indication by hand allows remaining power to be easily viewed and displayed in detail.

Preferably, the watch further includes self-generation means for converting the rotation of an oscillating weight to electricity. In the portable information device according to the invention with the above arrangement, the electricity generated by the self-generating means is supplied to the circuit of a telephone.

If the remaining power in the portable information device is used up so as to prevent telephone calls while away from home, the user will have troubled to charge the device. However, power generated by the self-generating means is supplied not only to the watch but also to the circuit of the portable information device, so that the telephone temporarily becomes available. This makes a telephone call or e-mail available in the case of urgent necessity.

Preferably, the watch indicates the functional information of the portable information device with a hand or mechanically, in addition to the time indication.

Suitably, a dial plate of the watch includes an area to indicate the functional information of the portable information device with a hand or mechanically, separately from the time indication. A plurality of the areas to provide the hand or mechanical indication may be arranged apart from each other, separately from the analog clock on the same dial plate.

Preferably, the watch indicates information on an incoming e-mail or an incoming answerphone with a hand or mechanically. Moving the hand of an analog watch with the incoming of e-mail allows the incoming to be checked even when the portable information device is closed. Also, the entire movement is attractive, so that the user can enjoy it visually.

Suitably, the watch provides stepwise receiving-sensitivity indication with a hand or mechanically depending on the receiving sensitivity of the communication function. The levels of the receiving sensitivity in various receiving environments are indicated with hand or mechanically, which are generally viewed only on an inside display in the conventional flip portable information devices. In general, they provide three-level indication, providing no detailed indication. Accordingly, the indication with hand allows receiving-sensitivity level in the use environment to be easily viewed and displayed in detail, thus allowing easy reading of the information.

Preferably, the portable information device comprises a solar battery as an auxiliary power source. According to the invention, the power consumption of the main power source (battery) can be reduced and light energy can be converted to electrical energy for storage by a solar battery, so that power necessary for operating the mechanical time-watch or the analog watch can be sufficiently supplied. The constant charge with the solar battery allows semipermanent operation of the watch.

Embodiments of the invention will now be described by way of further example only and with reference to the accompanying drawings, in which:-
Figs. 1(a) and 1(b) are perspective views of a cellular telephone according to a first embodiment of the present invention.
Fig. 2 is a sectional view of the cellular telephone shown in Figs. 1(a) and 1(b).
Fig. 3 is a block diagram of the cellular telephone shown in Figs. 1(a) and 1(b).
Fig. 4 is a block diagram showing the arrangement of an analog quartz watch.
Fig. 5 is an explanatory view of an operation example of the analog quartz watch.
Fig. 6 is a chart for mode switching with a mode select button.
Figs. 7(a) and 7(b) are explanatory views of modifications of the cellular telephone of Figs. 1(a) and 1(b).
Fig. 8 is a block diagram of a power unit for the cellular telephone of the invention.
Fig. 9 is a block diagram of a cellular telephone equipped with an analog quartz watch having the capability of a radio controlled watch that automatically collects time and so on.
Fig. 10 is a diagram showing the arrangement of another cellular telephone.
Fig. 11 is a cross-sectional view of an arrangement example of elements that constitute a digital display section shown in Fig. 10.
The present invention is not limited by the embodiments. The components of the embodiments include ones that can easily be replaced by those skilled in the art or substantially the same ones.

### [First Embodiment]

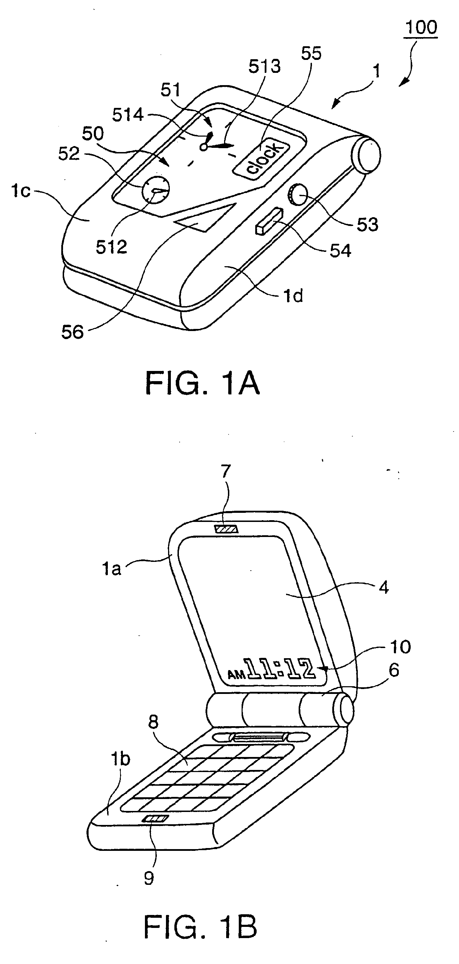

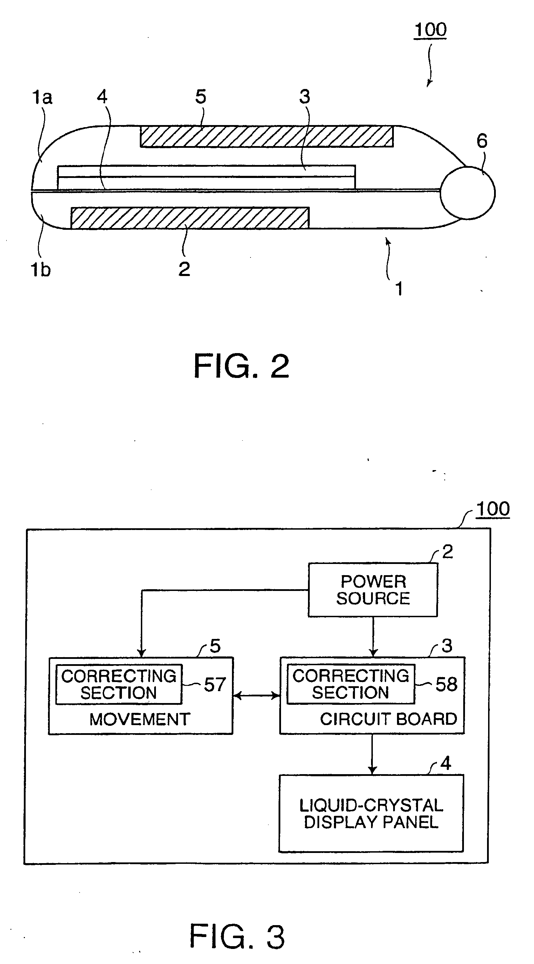

Figs. 1(a) and 1(b) are perspective views of a cellular telephone according to a first embodiment of the present invention. Fig. 2 is a sectional view of the cellular telephone shown in Figs. 1(a) and 1(b). Fig. 3 is a block diagram of the cellular telephone shown in Figs. 1(a) and 1(b). The cellular telephone 100 includes a power source 2 acting as a secondary battery, a circuit board 3 for controlling the cellular telephone 100, a display 4 for displaying information, such as a liquid-crystal display panel and an organic EL panel, and a movement 5 of an analog quartz watch 50 in a casing 1. Employing such a mechanical display watch (typically, an analog watch) for a potable information device adds the quality appearance to the portable information device, thus easily providing high decorativeness and an upscale image. The casing 1 has a flip structure divided by a hinge 6 into two pieces, having a display 4 and a speaker 7 on the display side 1a and an operation panel (operation keys) 8 and a microphone 9 on the operating side 1b, as shown in Fig. 1(b). The circuit board 3 is housed mainly in the display side 1a and the power source 2 is housed in the operating side 1b.

An analog quartz watch 50 is provided on the outer surface of the display side 1a of the casing 1, that is, on an outer surface 1c with the casing 1 closed, in other words, on the outer surface of the casing which corresponds to the back of the display 4, as shown in Fig. 1(a). The power source of the analog quartz watch 50 is common with the power source 2 of the cellular telephone 100. The analog quartz watch 50 includes a so-called small second 52 added to a two-hand analog display section 51, as in the drawing. A crown 53 and a mode select button 54 are arranged on a side 1d of the casing 1. In place of the two-hand analog display section 51, an analog quartz watch having a three-hand analog display section or a one-hand analog display section may be provided. It is also possible to provide various functions, such as a Greenwich mean time (GMT), a chronograph, a power reserve, a moon phase, and an electronic or mechanical alarm. Also, a digital display section 55 may be disposed together with the analog display section 51 (a combination quartz watch), as shown in Fig. 1(a). In such a case, the digital display section 55 may provide various indications such as date, week, e-mail receiving, and the condition of a radio wave. Furthermore, the casing 1 may have a lamp 56 for alerting the reception of a telephone call or an e-mail on the outer surface thereof.

Recent popular watches include an altimeter, a thermohygrometer, a compass, a tidal gauge, and a stop watch which are preferable for outdoor activities and sports such as trekking and skiing. The cellular telephone 100 may include a sensor and an electronic circuit for such functions, the indication of which may be made with the analog quartz watch 50. The altitude may be indicated by a minute hand or an hour hand, the temperature by a minute hand or an hour hand, and the humidity by an hour hand or a minute hand (not shown). Also, the N pole of the compass may be indicated by a minute hand or an hour hand. Hands dedicated for the indication may also be provided.

The movement of the analog quartz watch derives its supply of electricity from the power source 2 of the cellular telephone 100. In general, the power consumption of analog quartz watches is extremely lower than that of the conventional cell phones, thus exerting no bad effects on the power consumption of the cellular telephone 100. The display 4 displays a digital or analog watch 10. The watch 10 on the display 4 and the analog quartz watch 50 on the outer surface 1c coincide with each other all the time. In other words, a correcting section 57 of the movement 5 of the analog quartz watch 50 and a correcting section 58 of the circuit board 3 are connected with each other, wherein when the time of the analog quartz watch 50 is corrected, also the time of the watch 10 on the display 4 is automatically corrected in synchronization with the correcting action. On the other hand, also when the time of the watch 10 on the display 4 is corrected, the time of the analog quartz watch 50 is automatically corrected in synchronization with the correcting action.

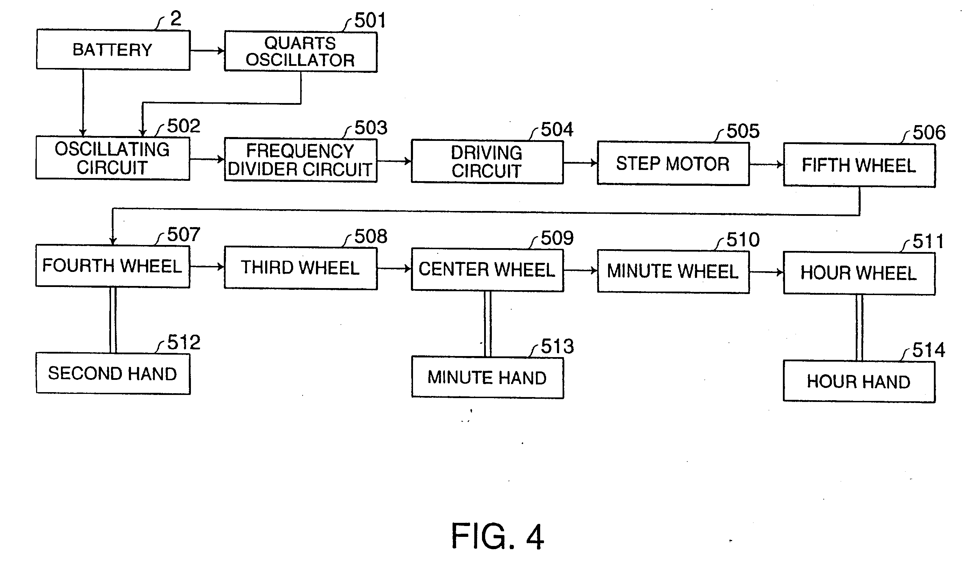

Fig. 4 is a block diagram showing the arrangement of an analog quartz watch. The analog quartz watch 50 includes a known quartz oscillator 501, an oscillating circuit 502, a frequency divider circuit 503, a driving circuit 504, a step motor 505, a fifth wheel 506, a fourth wheel 507, a third wheel 508, a center wheel 509, a minute wheel 510, and an hour wheel 511. The fourth wheel 507 has a second hand 512, the center wheel 509 has a minute hand 513, and the hour wheel 511 has an hour hand 514, respectively. The arrangement of the analog quartz watch 50 is not limited to that shown in the drawing, but all the known arrangements of the analog quartz watch 50 can be employed. Although the power source of the analog quartz watch 50 shares the power source 2 with the cellular telephone 100, an ordinary button battery or solar battery may be used as the power source of the analog quartz watch 50.

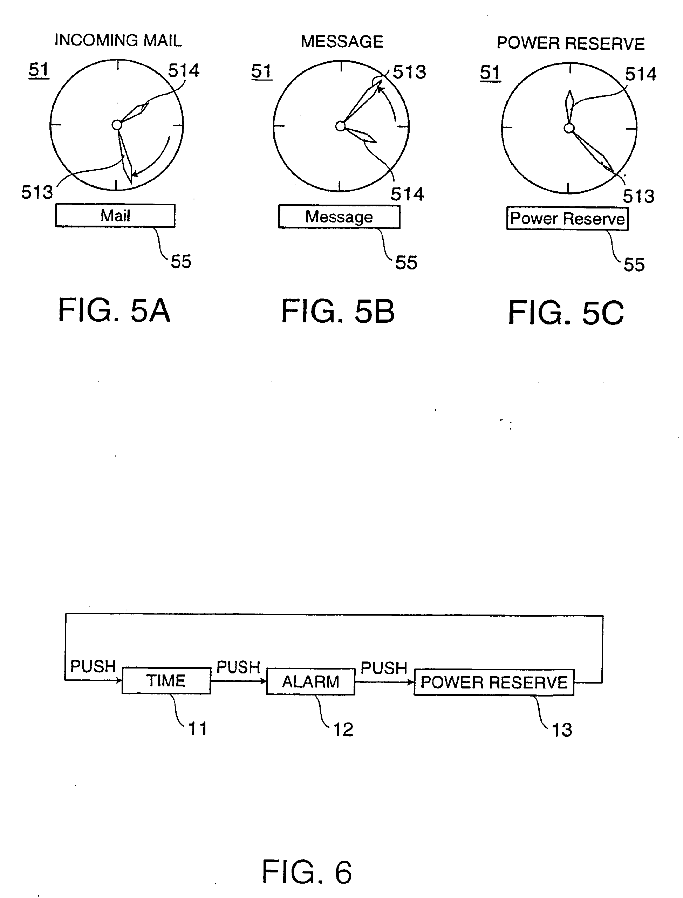

It is also possible to make the hands 512, 513, and 514 of the analog quartz watch 50 operate as shown in Fig. 5. In order to operate the hands 512, 513, and 514 independently, it is necessary to provide each of the hands 512, 513, and 514 with a step motor and a prescribed train wheel in the movement 5. For example, when the cellular telephone 100 has received an e-mail, the minute hand 513 is turned clockwise and the hour hand 514 indicates the number of incoming e-mails, as shown in Fig. 5(a). The indication of the minute hand 513 and the hour hand 514 may be reversed. In this case, since the hour hand points at "2," the number of incoming e-mails is two. When there is provided the digital display section 55, the word, Mail, is displayed on the digital display section 55.

When an answerphone message is received, the minute hand 513 is turned counterclockwise and the number of answerphone messages is indicated by the hour hand 514, as shown in Fig. 5(b). The indications of the minute hand 513 and the hour hand 514 may be reversed. In this case, since the hour hand 514 points at "4," the number of messages is four. When there is provided the digital display section 55, the word, Message, is displayed on the digital display section 55. Similarly, remaining electric power (the amount of power remaining in the power source 2 of the cellular telephone 100) is indicated by the minute hand 513 (or the hour hand 514). When "6" is pointed at, the power source 2 is in full charge condition. When "12" is pointed at, the power source 2 has no remaining power. When there is provided the digital display section 55, the word, Power Reserve, is displayed on the digital display section 55. The conventional cell phones indicated the indication of remaining power in three levels; however, the continuous indication by hand allows remaining power to be checked and viewed in detail. More specifically, it is recommended to receive information on the amount of electric power remaining in the power source 2 from the circuit board 3 and to drive the step motor 505 correspondingly, thereby turning the minute hand 513. With such a mechanical operation, the user can be provided with necessary information and pleasure. The operations of the hands 513 and 514 in the case of an e-mail and answerphone are not limited to those shown in the drawings.

A time indication 11, an alarm indication 12, and a power reserve indication 13 are switched at the push of the mode select button 54 of the analog quartz watch 50, as shown in a chart of Fig. 6. With the alarm indication 12, the alarm time can be set using the crown 53 (not shown). The analog quartz watch 50 sometimes includes the functions of world time, a stop watch, an altimeter, a thermohygrometer and so on. Even in such cases, the indication can be switched with the mode select button 54 (not shown).

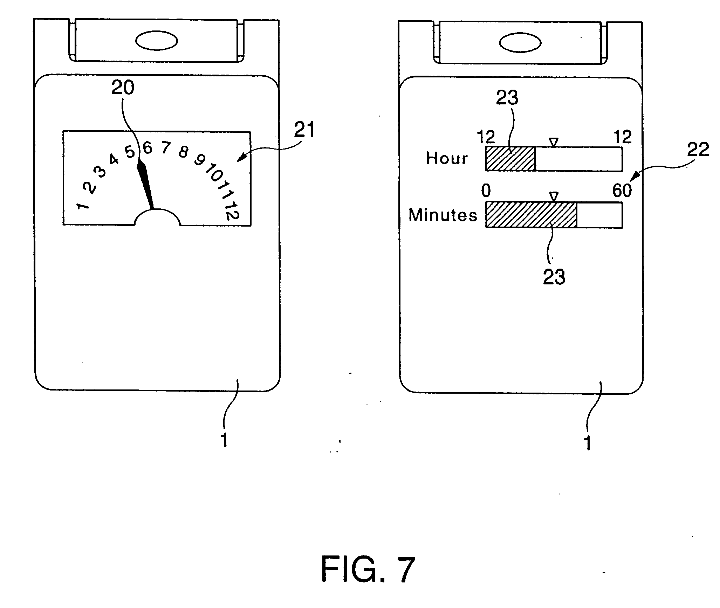

The indication of the analog quartz watch may employ, for example, a one-hand analog display section 21 in which time is indicated by about 180°-angle turn of a hand 20, as shown in Fig. 7(a). Alternatively, it may be an analog display section 22 in which time is indicated by a bar indicator, as shown in Fig. 7(b). This can be achieved, for example, by providing a bar indicator 23 with a rack and a train wheel from the step motor with a pinion gear. Since the cellular telephone 100 only has to have a mechanical indication in analog form by the analog quartz watch 50, it may employ other various designs.

As described above, the cellular telephone 100 includes the analog quartz watch 50 on the outer surface of the casing 1, thus having no mechanical feeling due to a liquid-crystal display but having high-quality and fashionable appearance, and so it will come into fashion among woman users. Also, these features differentiate the cellular telephone 100 from other cellular telephones, the appearance being different at a glance, promoting the purchase by users who are sensitive to new products, and thus seeming to achieve a great commercial success.

In the above example, the analog quartz watch 50 is given as an example; however, an analog mechanical watch may be provided. In this case, when the outer surface of the casing is formed in a skeleton structure so that the mechanism (a balance with hairspring, an escape wheel, a train wheel, a cam, a lever and so on) of the mechanical watch can be viewed from the exterior, a quality appearance can be increased. It is also possible to provide the casing outer surface 1c with a small window, through which a self-winding oscillating weight can be seen.

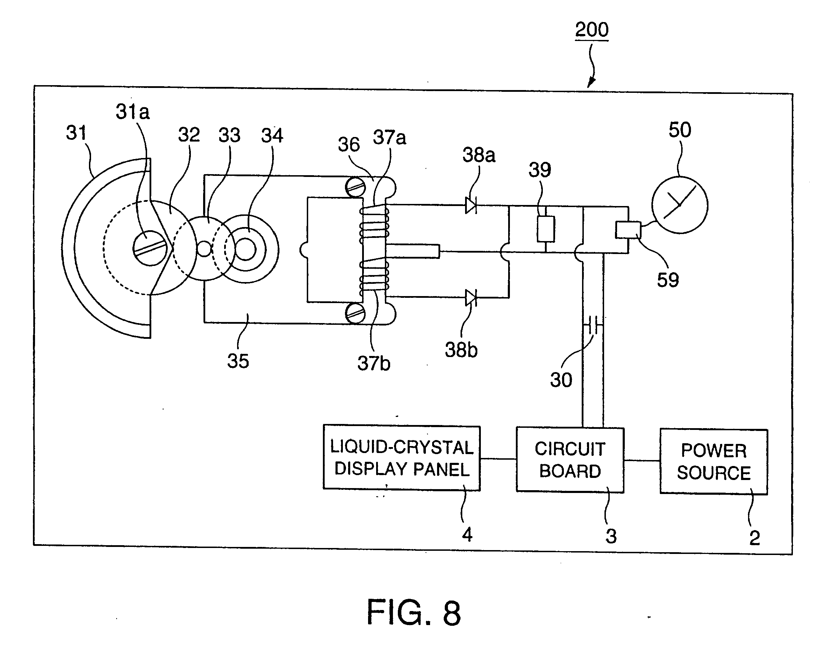

Preferably, a cellular telephone 200 includes a generator for converting mechanical energy into electric energy. The generator will be described primarily. An oscillating weight 31 is rotated around a rotation center 31a. The center of gravity of the oscillating weight 31 and the rotation center 31a deviate greatly from each other, as shown in Fig. 8. Accordingly, when the watch is moved by the motion of an arm and so on, the oscillating weight 31 is subjected to a moment of a couple, thereby being rotated. The rotation is increased in speed by a gearwheel 32 and an intermediate gearwheel 33 fixed to the oscillating weight 31, and is transmitted to a rotor 34 made of a permanent magnet. The rotor 34 has a stator 35 made of a highly magnetically permeable material therearound, being fixed to a highly magnetically permeable core 36.

Coils 37a and 37b are wound around the core 36. The coils 37a and 37b have diodes 38a and 38b as rectifier means, respectively, as shown in Fig. 8. Reference numeral 30 denotes a high-capacitance electric double layer capacitor (hereinafter, referred to as a capacitor) acting as electricity storage means. Reference numeral 39 designates an anti-overcharge circuit for preventing the overcharge of the capacitor 30. The analog quartz watch 50 is activated by a driving circuit 59 to indicate time. With such an arrangement, when the oscillating weight 31 is rotated by the motion of a user's arm or by gravity, the rotation is transmitted to the rotor 34 at increased speed, and the rotor 34 is in turn rotated to induce magnetic flux that changes with the rotation of the rotor 34 to the stator 35 and the magnetic core 36. The change of the magnetic flux induces alternate power to the coils 37a and 37b by the known action of electromagnetic induction, which is rectified by the diodes arranged one for each of the coils 37a and 37b and is stored in the capacitor 30.

The electric power stored in the capacitor 30 may also be supplied to the circuit board 3 of the cellular telephone 200. In general, after the power source 2 which is a secondary cell of the cellular telephone 200 has discharged electricity, the cellular telephone 200 becomes unavailable without a battery charger and an AC source. Therefore, the capacitor 30 and the circuit board 3 are connected together to supply the power of the capacitor 30 to the circuit board 3. Since the power consumption of the circuit board 3 is higher than that of the analog quartz watch 50, the capacity of the capacitor 30 is selected corresponding to the power consumption of the circuit board 3. Since the capacity of the casing of the cellular telephone 200 is larger than that of a wrist watch, even the relatively large-sized capacitor 30 can be housed. Preferably, the power stored in the capacitor 30 can be used by the circuit board 3 only after the secondary battery has discharged electricity. More preferably, only those functions which require less power consumption, such as transmitting/receiving e-mails, can be used at that time.

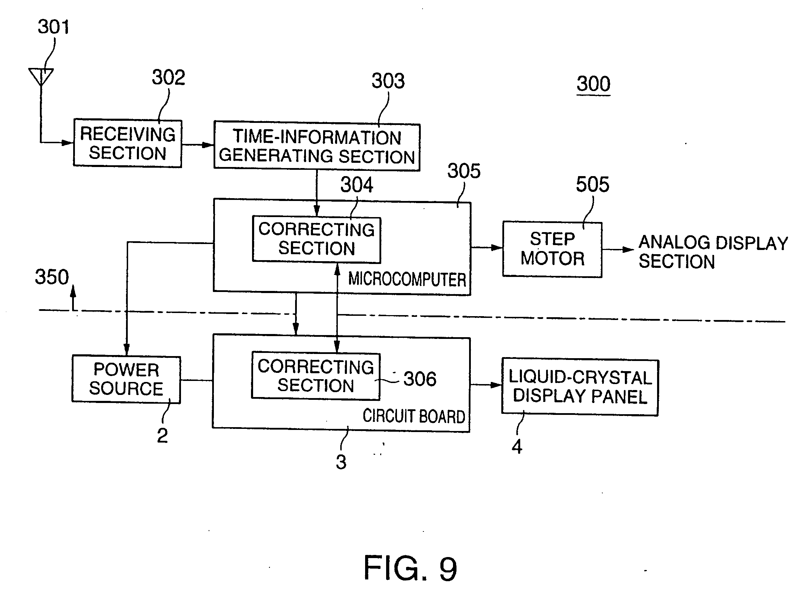

A cellular telephone 300 shown in Fig. 9 is equipped with an analog quartz watch 350 having the function of a radio controlled watch which automatically corrects time and so on. The LF standard frequency and time signal that bears Standard Time information (time code) that is broadcasted by Communications Research Laboratory is called LF JJY, which is transmitted at a frequency of 40 KHz. Receiving, and detecting or demodulating it allows Standard Time information to be extracted, thus providing Japan Standard Time. Known techniques for correcting time by the standard frequency and time signal include "Electronic Wave Correction Clock" disclosed in Japanese Unexamined Patent Application Publication No. 11-304973.

As shown in the drawing, the cellular telephone 300 includes a rod antenna 301 for receiving the standard frequency and time signal, a receiving section 302 for selectively receiving a predetermined frequency of 40 Hz to extract time code carried by the standard frequency and time signal, a time-information generating section 303 for generating present accurate time information from the time code, a correcting section 304 for correcting the time of the analog quartz watch 350 of the cellular telephone 300 in accordance with the information from the time-information generating section 303, a microcomputer 305 including the correcting section 304 and driving a step motor 505, and a correcting section 306 for automatically correcting the watch of the cellular telephone 300 in synchronization with the time correction of the analog quartz watch 350.

The time code carried by the standard frequency and time signal is detected by the receiving section 302. On the basis of the time code, the time-information generating section 303 generates accurate time and sends it to the microcomputer 305. The microcomputer 305 compares the accurate time with the time of the analog quartz watch 350 and issues a correction command to the correcting section 304. The correcting section 304 drives the step motor 505 by a predetermined amount in accordance with the correction command to correct display time mechanically. The correcting section 306 on the circuit board 3 corrects the time in synchronization with the correcting section 304 of the analog quartz watch 350 so as to agree with the time of the analog quartz watch 350.

With the cellular telephone 300, accurate time can always be provided, which is preferable when accurate time is required, such as stock exchange. For example, it is preferable for the Internet commerce, mobile banking and the like using i-mode (registered trade mark), EZweb or the like.

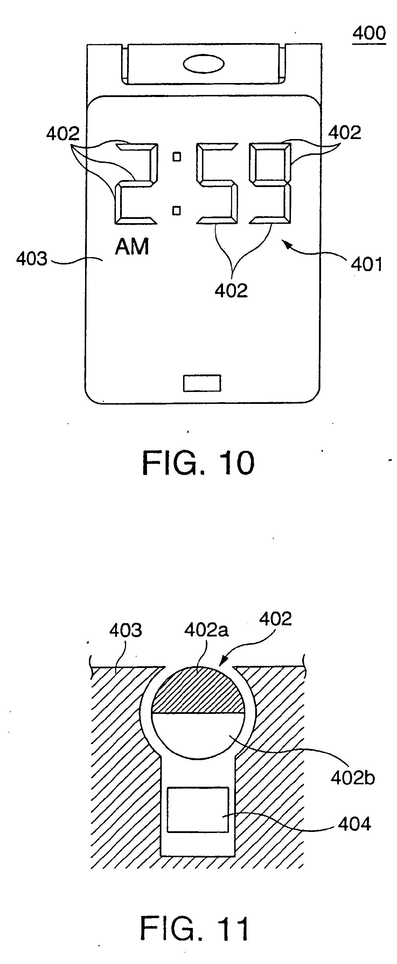

Fig. 10 is a diagram showing the arrangement of another cellular telephone. The cellular telephone 400 is an example of a mechanical digital display. As shown in the drawing, each element 402 in a digital display section 401 is shaped like a rod, wherein radial one-half 402a is colored in orange and a remaining half 402b is colored in the same color as its periphery, such as black. Each element 402 is magnetized in the radial direction and a casing 403 includes an electromagnet 404 built-in for each element 402. Controlling the direction of energization to the electromagnet 404 allows each element 402 to be reversed. This allows mechanical and three-dimensional digital display which cannot be realized by a liquid-crystal display panel and an organic EL panel.

While the above embodiments have been described with an example of a cellular telephone, it is also possible to take a portable information device called a personal digital assistance (PDA), a portable personal computer, a digital still camera, a digital video camera, a liquid crystal television, a pager, an electronic databook, and an electronic calculator, in addition to the cellular telephone.

As described above, the portable information device according to the present invention is equipped with a mechanical time-watch on the side that becomes the outer side of the casing when the casing is closed, thus adding a high-quality and fashionable appearance. Also, the portable information device according to an embodiment is equipped with an analog watch, thus further adding a high-quality and fashionable appearance.

According to the portable information device of the invention, the same time as that indicated on a display can be viewed on a watch outside a foldable (flip) casing without the need to open the casing to see the time on the display. Also, the time advanced or delayed from a correct time may be displayed on the watch and is synchronized with the correct time, with the correct time displayed on the display, which allows various practical uses as necessary.

According to the portable information device of an embodiment, time is automatically corrected at a regular frequency, so that accurate time indication with a minimum error can always be seen on the portable information device.

Furthermore, according to the portable information device of an embodiment, the analog watch moves the hand in response to the reception of an e-mail or answerphone message. Therefore, such incoming message can easily be confirmed and the user can enjoy it visually.

According to the portable information device of an embodiment, the analog watch indicates the remaining power with the position of the hand, so that the remaining power is easy to view and can be displayed in detail.

According to the portable information device of an embodiment, the watch provides stepwise receiving-sensitivity indication with hand or mechanically depending on the receiving sensitivity of the communication function, so that the level of the receiving sensitivity in the use environment can easily be viewed and displayed in detail to allow easy recognition thereof.

According to the portable information device of an embodiment, the power consumption of the main power source (battery) can be reduced and light energy can be converted to electrical energy for storage by a solar battery, so that power necessary for operating the mechanical time-watch or the analog watch can be sufficiently supplied. The constant charge with the solar battery allows semipermanent operation of the watch.

According to the portable information device of an embodiment, the electric power that is generated by self-generation means is supplied to the circuit of the telephone. This allows the telephone to be used even without electricity from it's usual power source.

## Claims

1. A flip portable information device (100) having a foldable casing (1), comprising:
a display (4) for displaying information and a clock, on a side of the casing (1) that becomes an inner side when the casing (1) is closed; **characterized by**
an electro-mechanical clock (50) on a side of the casing (1) that becomes an outer side when the casing (1) is closed;
wherein the time indication by the electro-mechanical clock (50) is made in synchronization with time indication on the display (4).

2. The portable information device (100) according to claim 1, wherein the electro-mechanical clock (50) is an analog clock.

3. The portable information device (100) according to claim 1 or 2, further comprising:
a first correction section (57) disposed on the outer side with the electro-mechanical clock (50); and
a second correction section (58) on a circuit board (3) that controls the display (4) ; wherein
the first correction section (57) and the second correction section (58) are connected with each other so that when the time shown on one of the electro-mechanical clock (50) and the clock on the display (4) is corrected, the time shown on the other of the electro-mechanical clock (50) and the clock on the display (4) is automatically corrected in synchronization.

4. The portable information device (100) according to any one of claims 1 to 3, wherein the electro-mechanical clock (50) is a radio controlled watch that automatically corrects time.

5. The portable information device (100) according to claim 1, wherein the electro-mechanical clock (50) indicates the functional information of the portable information device (100) mechanically, in addition to the time indication.

6. The portable information device (100) according to claim 5, wherein a dial plate of the electro-mechanical clock (50) includes an area to indicate the functional information of the portable information device (100) mechanically, separately from the time indication.

7. The portable information device (100) according to claim 5, wherein the electro-mechanical clock (50) indicates the information on an incoming e-mail or an incoming answerphone mechanically.

8. The portable information device (100) according to claim 5, wherein the electro-mechanical clock (50) provides stepwise remaining-power indication mechanically, depending on the remaining power.

9. The portable information device (100) according to claim 5, wherein the electro-mechanical clock (50) provides stepwise receiving-sensitivity indication mechanically, depending on the receiving sensitivity of a communication function.

10. The portable information device (100) according to claim 1, wherein the electro-mechanical clock (50) and the portable information device (100) have a common power source (2).

11. The portable information device (100) according to claim 10, comprising a solar battery as an auxiliary power source.

12. The portable information device (100) according to claim 10, comprising self-generation means for converting the rotation of an oscillating weight (31) to electricity.

13. The portable information device (100) according to claim 12, wherein the electricity generated by the self-generating means is supplied to the circuit (3) of a telephone.

## Patentansprüche

1. Tragbares Flip-Informationsgerät (100) mit einem zusammenklappbaren Gehäuse (1), umfassend:
eine Anzeige (4) zum Anzeigen von Informationen und einer Uhr an einer Seite des Gehäuses (1), die zur Innenseite wird, wenn das Gehäuse (1) geschlossen ist; **gekennzeichnet durch**
eine elektromechanische Uhr (50) an einer Seite des Gehäuses (1), die zur Außenseite wird, wenn das Gehäuse (1) geschlossen ist;
wobei die Zeitanzeige **durch** die elektromechanische Uhr (50) mit der Zeitanzeige auf der Anzeige (4) synchronisiert ist.

2. Tragbares Informationsgerät (100) nach Anspruch 1, wobei die elektromechanische Uhr (50) eine analoge Uhr ist.

3. Tragbares Informationsgerät (100) nach Anspruch 1 oder 2, des Weiteren umfassend:
einen ersten Korrekturabschnitt (57), der an der Außenseite mit der elektromechanischen Uhr (50) angeordnet ist; und
einen zweiten Korrekturabschnitt (58) auf einer Schaltungsplatte (3), der die Anzeige (4) steuert; wobei
der erste Korrekturabschnitt (57) und der zweite Korrekturabschnitt (58) miteinander verbunden sind, so dass, wenn die Zeit, die entweder auf der elektromechanischen Uhr (50) oder der Uhr auf der Anzeige (4) angezeigt wird, korrigiert wird, die Zeit, die auf der jeweils anderen von der elektromechanischen Uhr (50) und der Uhr auf der Anzeige (4) angezeigt wird, automatisch synchron korrigiert wird.

4. Tragbares Informationsgerät (100) nach einem der Ansprüche 1 bis 3, wobei die elektromechanische Uhr (50) eine funkgesteuerte Uhr ist, die die Zeit automatisch korrigiert.

5. Tragbares Informationsgerät (100) nach Anspruch 1, wobei die elektromechanische Uhr (50) zusätzlich zu der Zeitanzeige die Funktionsinformationen des tragbaren Informationsgeräts (100) mechanisch anzeigt.

6. Tragbares Informationsgerät (100) nach Anspruch 5, wobei ein Ziffernblatt der elektromechanischen Uhr (50) eine Fläche zur mechanischen Anzeige der Funktionsinformationen des tragbaren Informationsgeräts (100), getrennt von der Zeitanzeige, enthält.

7. Tragbares Informationsgerät (100) nach Anspruch 5, wobei die elektromechanische Uhr (50) die Informationen bezüglich einer eingehenden E-Mail oder eines eingehenden Telefongesprächs am Anrufbeantworter mechanisch anzeigt.

8. Tragbares Informationsgerät (100) nach Anspruch 5, wobei die elektromechanische Uhr (50) mechanisch eine stufenweise Anzeige der verbleibenden Energie, abhängig von der verbleibenden Energie, bereitstellt.

9. Tragbares Informationsgerät (100) nach Anspruch 5, wobei die elektromechanische Uhr (50) mechanisch eine stufenweise Anzeige der Empfangsempfindlichkeit, abhängig von der Empfangsempfindlichkeit einer Kommunikationsfunktion, bereitstellt.

10. Tragbares Informationsgerät (100) nach Anspruch 1, wobei die elektromechanische Uhr (50) und das tragbare Informationsgerät (100) eine gemeinsame Energiequelle (2) haben.

11. Tragbares Informationsgerät (100) nach Anspruch 10, umfassend eine Solarbatterie als Hilfsenergiequelle.

12. Tragbares Informationsgerät (100) nach Anspruch 10, umfassend ein Selbsterzeugungsmittel zum Umwandeln der Rotation eines oszillierenden Gewichts (31) in Elektrizität.

13. Tragbares Informationsgerät (100) nach Anspruch 12, wobei die Elektrizität, die von dem Selbsterzeugungsmittel erzeugt wird, zu dem Schaltkreis (3) eines Telefons geleitet wird.

## Revendications

1. Dispositif informatique portable à abattant (100) possédant un boîtier repliable (1), comprenant :
un afficheur (4) pour afficher de l'information et une horloge, sur un côté du boîtier (1) qui devient un côté intérieur lorsque le boîtier (1) est fermé ; **caractérisé par**
une horloge électromécanique (50) sur un côté du boîtier (1) qui devient un côté extérieur lorsque le boîtier (1) est fermé ;
l'indication de l'heure par l'horloge électromécanique (50) étant réalisée en synchronisation avec l'indication de l'heure sur l'afficheur (4).

2. Dispositif informatique portable (100) selon la revendication 1, l'horloge électromécanique (50) étant une horloge analogique.

3. Dispositif informatique portable (100) selon la revendication 1 ou 2, comprenant par ailleurs :
une première section de correction (57) disposée sur le côté extérieur avec l'horloge électromécanique (50) ; et
une deuxième section de correction (58) sur une carte de circuits (3) qui contrôle l'afficheur (4); moyennant quoi
la première section de correction (57) et la deuxième section de correction (58) sont connectées ensembles de sorte que lorsque l'heure montrée sur l'une parmi l'horloge électromécanique (50) et l'horloge sur l'afficheur (4) est corrigée, l'heure montrée sur l'autre parmi l'horloge électromécanique (50) et l'horloge sur l'afficheur (4) est automatiquement corrigée en synchronisation.

4. Dispositif informatique portable (100) selon l'une quelconque des revendications 1 à 3, l'horloge électromécanique (50) étant une montre télécommandée qui corrige automatiquement l'heure.

5. Dispositif informatique portable (100) selon la revendication 1, l'horloge électromécanique (50) indiquant l'information fonctionnelle du dispositif informatique portable (100) de manière mécanique, en plus de l'indication sur l'heure.

6. Dispositif informatique portable (100) selon la revendication 5, un cadran de l'horloge électromécanique (50) incluant une zone pour indiquer l'information fonctionnelle du dispositif informatique portable (100) de manière mécanique, séparément de l'indication de l'heure.

7. Dispositif informatique portable (100) selon la revendication 5, l'horloge électromécanique (50) indiquant l'information dans un message électronique entrant ou un appel entrant de réponse de manière mécanique.

8. Dispositif informatique portable (100) selon la revendication 5, l'horloge électromécanique (50) fournissant mécaniquement une indication sur l'énergie restante par paliers, en fonction de l'énergie restante.

9. Dispositif informatique portable (100) selon la revendication 5, l'horloge électromécanique (50) offrant mécaniquement une indication sur la sensibilité de réception par paliers, en fonction de la sensibilité de réception d'une fonction de communication.

10. Dispositif informatique portable (100) selon la revendication 1, l'horloge électromécanique (50) et le dispositif informatique portable (100) ayant une source d'énergie commune (2).

11. Dispositif informatique portable (100) selon la revendication 10, comprenant une pile solaire en tant que source d'énergie auxiliaire.

12. Dispositif informatique portable (100) selon la revendication 10, comprenant un moyen de génération automatique pour convertir la rotation d'une masse oscillante (31) en électricité.

13. Dispositif informatique portable (100) selon la revendication 12, l'électricité générée par le moyen de génération automatique étant fournie au circuit (3) d'un téléphone.
